# EUROPÄISCHE PATENTSCHRIFT

(11) **EP 1 281 046 B1**
(45) Veröffentlichungstag und Bekanntmachung des Hinweises auf die Patenterteilung: **16.02.2005**
(21) Anmeldenummer: 01936016.3
(22) Anmeldetag: 28.04.2001
(51) Int. Cl.: G01D 5/347

(54) **VORRICHTUNG ZUR ERFASSUNG DES DREHWINKELS ZWISCHEN ZWEI BAUTEILEN**
DEVICE FOR DETECTING THE ANGLE OF ROTATION BETWEEN TWO COMPONENTS
DISPOSITIF POUR DETECTER L'ANGLE DE ROTATION ENTRE DEUX ELEMENTS CONSTITUTIFS

(30) Priorität: 11.05.2000 DE 10023196
(43) Veröffentlichungstag der Anmeldung: 05.02.2003
(73) Patentinhaber: O & K ORENSTEIN & KOPPEL AG, 13581 Berlin (DE)
(72) Erfinder: LEIDINGER, Gustav, 86316 Friedberg (DE)
(74) Vertreter: Patentanwälte Meinke, Dabringhaus und Partner
(86) Internationale Anmeldenummer: PCT/DE2001/001643
(87) Internationale Veröffentlichungsnummer: WO 2001/086226

(56) Entgegenhaltungen:
- DE-A- 3 537 235
- DE-A- 19 941 168
- US-A- 3 498 254

## Beschreibung

Die Erfindung betrifft eine Vorrichtung zur Erfassung des Drehwinkels zwischen zwei Bauteilen mit den Merkmalen nach dem Oberbegriff des Patentanspruchs 1.

Mit zunehmender Automatisierung von Bewegungsabläufen der Arbeitsgeräte von Baumaschinen, Landmaschinen, Kranen, aber auch Kommunalfahrzeugen, stellt sich immer häufiger die Aufgabe, die Winkelstellung von Bauteilen, wie Hubrahmen, Auslegern oder ähnlichen Elementen, entweder gegen die sie tragenden Rahmen oder von zwei der genannten Bauteile zueinander zu erfassen, um entweder ihre Lage dem Bediener anzuzeigen oder aber um Bewegungsabläufe nach einem vorgegebenen Steuerungsprogramm zu regeln und zu steuern.

Die Verbindung der genannten Bauteile mit dem sie tragenden Rahmen oder von zwei Bauteilen untereinander erfolgt in den weit überwiegenden Fällen durch eine Bolzenlagerung, welche eine relative Drehung der beiden verbundenen Bauteile mit einem Freiheitsgrad zueinander erlaubt. Seltener finden Gleitverbindungen mit ebenfalls nur einem Freiheitsgrad oder Verbindungen mit mehreren Freiheitsgraden, wie z.B. Kugelgelenke, Anwendung.

Die Erfindung bezieht sich auf die erstgenannte Anordnung, bei der bevorzugt Winkelsensoren eingesetzt werden, die den relativen Winkel zwischen den beiden mittels Bolzen verbundenen Bauteilen erfassen. Die vorherrschende Bauart solcher Winkelsensoren ist derart, daß in einem meist zylindrischen Gehäuse mittig eine Welle gelagert ist, über welche der zu erfassende Winkel zwischen den beiden drehbar miteinander verbundenen Bauteilen in den Winkelsensor eingeleitet wird. In diesem wird der Winkel nun über ein Potentiometer oder auf induktivem Wege in ein elektrisches Signal umgesetzt, das entweder zur Anzeige für die relative Stellung der erfaßten Bauteile für den Bediener herangezogen wird oder als Eingangssignal für eine elektronische Steuereinheit dient, in welcher es mit dem Steuer- oder Regelprogramm verknüpft wird, um den gewünschten Bewegungsablauf der erfaßten und anderer damit im Zusammenhang stehender Bauteile zu erzielen.

Bei einer gattungsgemäßen Vorrichtung erfolgt die Einleitung der Drehbewegung auf die Sensorwelle des Winkelsensors bislang dadurch, daß auf der Sensorwelle ein Mitnehmer in Hebelform auf drehfeste Weise (form- oder kraftschlüssig) befestigt ist. Das Gehäuse des Winkelsensors ist über ein Distanzstück an einem der beiden Bauteile, deren Winkellage erfaßt werden soll, in einer solchen Stellung befestigt, daß die Mittellinie der im Gehäuse gelagerten Sensorwelle mit der des die beiden Bauteile gelenkig verbindenden Bolzens fluchtet. Dabei wird über das Distanzstück die Stirnseite des Gehäuses des Winkelsensors von dem diesen tragenden Bauteil in einem Abstand gehalten, daß der Mitnehmer sich mit einem entsprechenden Sicherheitsabstand vor dem im Verhältnis zum Winkelsensor festen Bauteil drehen kann. Am anderen, sich um den die beiden Bauteile verbindenden Bolzen in Relation zum Winkelsensor drehenden Bauteil ist ein Stift, üblicherweise in kreiszylindrischer Form achsparallel zum Bolzen befestigt, der mit seinem freien Ende in eine Ausnehmung des Mitnehmers des Winkelgebers eingreift. Der Stift muss in radialer Richtung innerhalb der Ausnehmung des Mitnehmers verschiebbar sein, um beim unvermeidlichen Lagerspiel des die beiden Bauteile verbindenden Bolzens nicht verbogen zu werden oder bei massiver Ausführung keine unzulässigen Kräfte auf die Wellenlagerung des Winkelsensors auszuüben.

Führt nun eines der beiden durch den Bolzen verbundenen Bauteile eine Drehbewegung um das andere aus, so dreht der Stift über den auf der Welle des Winkelsensors befestigten Mitnehmer die Sensorwelle mit. Diese bislang übliche Anordnung von Winkelsensoren weist eine Mehrzahl von Nachteilen auf, die sowohl eine sichere und praktische Anwendung als auch die Genauigkeit des zu erfassenden Drehwinkels beeinträchtigen. Eine genaue Übertragung des Drehwinkels zwischen den beiden sich um den sie verbindenden Bolzen drehenden Bauteilen ist nur dann gewährleistet, wenn die Mittellinie der Sensorwelle des Winkelsensors genau mit der des Bolzens fluchtet. Diese Fluchtung ist dabei in der Praxis schwierig herzustellen, weil wegen des durch den Mitnehmer bedingten Distanzstückes und aufgrund des möglichen Drehwinkels der Bauteile und damit auch des Mitnehmers von bis zu über 180 Grad Zentrierungen am Winkelsensor und am Bauteil von diesem Distanzstück nur in einem entsprechend geringeren Bogenmaß umfaßt werden können und somit nur ein Anlegen des Bogens des Distanzstückes an die Zentrierungen, aber keine Zentrierung im eigentlichen Sinne gegeben ist. Eine genauere Verbindung ist allenfalls dadurch herzustellen, daß das bogenförmige Distanzstück an beiden Seiten selbst zwei parallel zueinander stehende Platten mit fluchtenden Zentrierungen trägt. Ein solches Teil ist aber nur verhältnismäßig aufwendig anzufertigen.

In ähnlicher Weise wirkt sich ein Spiel des Bolzens aus. Bewegt sich das um den Bolzen drehende Bauteil innerhalb des Lagerspiels in eine Richtung senkrecht zur momentanen Stellung des Mitnehmers, so erfährt die Sensorwelle des Winkelsensors eine Drehbewegung, ohne daß die beiden Bauteile ihre Winkellage zueinander geändert haben. Damit wird vom Winkelsensor eine nicht eingetretene Winkeländerung registriert. Da beim rauhen Betrieb von Arbeitsmaschinen, wie z.B. Baggern, bis zum Lagertausch einige 0,1 mm Spiel hingenommen werden und das Verhältnis von gesamter Auslegerlänge zu der des Mitnehmers ein Mehrhundertfaches betragen kann, kann dadurch die Abweichung an der Grabschneide des Arbeitsgerätes bei automatisierten Profilierungsarbeiten Werte erreichen, welche außerhalb hinnehmbarer Toleranzen liegen.

Auch der Stift, der am sich um den Verbindungsbolzen drehenden Bauteil befestigt ist und in den Mitnehmer eingreift, weist ein gewisses Spiel in diesem in Umfangsrichtung der Drehbewegung auf, das bei Umkehr der Drehrichtung der beiden Bauteile zueinander zunächst überbrückt werden muß, bis der Mitnehmer dann in die entgegengesetzte Richtung bewegt wird. Auch dieses Spiel geht als Winkelverfälschung ein.

Winkelsensoren müssen zudem bei Arbeitsmaschinen, wie Erdbewegungsgeräten, Landmaschinen und dgl., häufig an Stellen angebracht, werden, wo sie entweder in direkte Berührung mit dem zu bearbeitenden Material kommen können oder Schlägen durch umhergeschleudertes oder herabfallendes Material ausgesetzt sind. Daher sind Schutzabdeckungen vorzusehen, die sowohl das Gehäuse des Winkelsensors als auch den Mitnehmer schützen, da eine Schlageinwirkung auf diesen die Sensorwelle des Winkelsensors wie deren Lagerung beschädigen kann. Zwar kann das Distanzstück so ausgebildef sein, daß es mit der Abdeckung ein einheitliches Bauteil bildet, trotzdem verbleibt im Bereich der kreisbogenförmigen Bahn des Stiftes zwangsläufig ein Spalt, durch den Material von außen eindringen kann.

Abschließend muß noch aus der Sicht zum Ausgleich unvermeidlicher Fluchtungsfehler zwischen der Ausgangswelle des Winkelsensors und einer Welle, deren Winkelstellung gegenüber einem feststehenden Rahmen gemessen werden soll, auf die verschiedenen Ausführungsvarianten nach der DE 35 37 235 A1, der US 3,498,254 und der DE 199 41 168 A1 hingewiesen werden. Bei allen drei Winkelsensoren verschiedenster Arbeitsprinzipe ist genannte Welle mit der Ausgangswelle des Winkelsensors über ein bis zu einem gewissen Grade Spiel bzw. Fluchtungsfehler ausgleichendes Verbindungsglied direkt verbunden. Dabei handelt es sich in den beiden erstgenannten Ausführungsvarianten um drehsteife biegeelastische Verbindungselemente und im dritten Fall um eine spielgebende formschlüssige Verbindung, die durch Torsionsfedem in einer vorbestimmten Position gehalten wird. Allen drei Lösungen haftet der Nachteil an, daß diese Verbindungen stets räumlich zwischen dem Winkelsensor und der Welle angeordnet sind, wofür entsprechender Bauraum erforderlich ist. Das hätte bei einer Anwendung dieser Lösung zur Messung des Drehwinkels zwischen zwei Bauteilen an Baumaschinen und dgl. zur Folge, daß der Drehwinkelsensor in einem relativ großen Abstand auf einem der beiden Bauteile befestigt werden müßte, wo er bestimmt bald durch Kollision mit Gegenständen in der Umgebung beschädigt oder sogar abgerissen würde. Außerdem wären diese Verbindungen allein durch ihre Anordnung der rauhen Umgebung ungeschützt ausgesetzt, so daß sie dadurch in kurzer Zeit verschlissen wären.

Schließlich ist der mögliche Ausgleich von Fluchtungsfehlern mit so ausgeführten Verbindungen nur begrenzt möglich.

Aufgabe der Erfindung ist es deshalb, eine gattungsgemäße Vorrichtung so zu verbessern, daß der Drehwinkel zwischen zwei Bauteilen sehr genau erfaßt werden kann und die Vorrichtung im Einsatz an Baumaschinen, Landmaschinen, Kranen usw. eine hohe Lebensdauer erreicht.

Diese Aufgabe wird bei einer Vorrichtung der eingangs bezeichneten Art durch die Merkmale des Patentanspruchs 1 gelöst, wobei in den abhängigen Ansprüchen Merkmale angegeben sind, die diese Lösung in vorteilhafter Weise weiterentwickeln.

Durch die direkte oder indirekte drehfeste Anbringung des Winkelsensors an einer Seite des ersten Bauteils oder des beide Bauteile miteinander verbindenden Bolzens überragt er diese nur unbedeutend. Im Bolzen befindet sich eine koaxiale Längsbohrung, in deren eines Ende die Sensorwelle des Winkelsensors hineinragt. In dieser Längsbohrung ist koaxial zu dieser ausgerichtet eine Verbindungswelle angeordnet, deren Durchmesser kleiner als der der Längsbohrung ist. Die Verbindungswelle kann so auf besonders raumsparende Weise untergebracht werden. Die dadurch bedingte Verringerung des Widerstandsmomentes des Bolzens ist wegen des kleinen Verhältnisses von Bohrungsdurchmesser zu Außendurchmesser des Bolzens vernachlässigbar klein und daher auf die Dimensionierung des Bolzens selbst, wie auf die der beiden Bauteile, welche nach den äußeren auf sie einwirkenden Kräften zu erfolgen hat, ohne Einfluss. Das eine Ende der Verbindungswelle ist mit der Sensorwelle unter Zwischenschaltung eines drehsteifen biegeelastischen Elements mit der Sensorwelle antriebsmäßig gekoppelt. Ihr anderes Ende steht mit einem am zweiten Bauteil befestigten Mitnehmer in antriebsmäßiger Verbindung. Aufgrund dieser Gestaltung ist eine weitgehend genaue Erfassung des Drehwinkels auch dann gewährleistet, wenn keine exakte Fluchtung zwischen der Achse der Sensorwelle des Winkelsensors und dem Bolzen besteht, weil bei einer Abweichung von der exakten Fluchtung lediglich die Verbindungswelle in gewissen Grenzen schräg zur fluchtenden Richtung zu liegen kommt. Dies gilt auch, wenn ein Lagerspiel zwischen dem Bolzen und dem sich um ihn drehenden Bauteil auftritt. Bei radialer Bewegung des Bauteils innerhalb des Lagerspiels führt der mit dem zweiten Bauteil fest verbundene Mitnehmer die gleiche Bewegung aus, so daß sich die Verbindungswelle im Verhältnis zur Achse der Sensorwelle radial um den gleichen Betrag verschiebt. Trotzdem wird die Sensorwelle des Winkelsensors um den gleichen Winkel gedreht, wie dieser zwischen den beiden Bauteilen auftritt.

In einer vorteilhaften Ausgestaltung der Erfindung nach dem abhängigen Anspruch 2 kann jeder Winkelsensor herkömmlicher Bauart je nach der Ausbildung der Halterungen seines Gehäuses, welche meist an dessen Stirnfläche liegen, direkt oder über eine Tragplatte am Bolzen, an einer Bolzenhalteplatte oder am ersten Bauteil befestigt sein, sofern das Winkelsensorgehäuse einen entsprechend großen Durchmesser aufweist.

Eine besonders bevorzugte Ausgestaltung der Erfindung wird nach dem abhängigen Anspruch 3 darin gesehen, daß die Sensorwelle über ein erstes drehfestes biegeelastisches Element einerseits mit der Verbindungswelle und andererseits über ein zweites drehsteifes Element mit dem Mitnehmer verbunden ist. Bei dieser Ausgestaltung können auch größere Abweichungen von der exakten Fluchtung zwischen der Sensorwelle und dem Bolzen ausgeglichen werden, da bei einer solchen Abweichung lediglich die Verbindungswelle im Verhältnis zur Achse des Bolzens schräg oder versetzt steht. Dies gilt gleichermaßen auch bei einem Lagerspiel zwischen dem Bolzen und dem sich um ihn drehenden Bauteil.

Eine zweckmäßige Ausgestaltung der Erfindung wird nach dem abhängigen Anspruch 4 darin gesehen, das erste drehsteife biegeelastische Element als Faltenbalg, insbesondere als Metallfaltenbalg, auszubilden. Anstelle eines solchen Metallfaltenbalges können aber auch Kardangelenke oder Gummi-(Kunststoff-) Kupplungen Verwendung finden.

Das zweite drehsteife Element ist nach den Merkmalen im abhängigen Anspruch 5 vorzugsweise als Muffe ausgebildet, welche drehfest sowohl mit dem Mitnehmer als auch der Verbindungswelle verbunden ist. Statt dessen können aber auch drehsteife und dabei biegeelastische Elemente, beispielsweise ebenfalls in

Form eines Kardangelenkes oder dgl., verwendet werden.

Um eine möglichst einwandfreie Funktion der Vorrichtung zur Erfassung des Drehwinkels zu gewährleisten, ist vorteilhafterweise nach den Merkmalen des abhängigen Anspruchs 6 der Mitnehmer mit Abstand zum Bolzen befestigt. Um den Winkelsensor dabei gegen mechanische Belastungen von außen zu schützen, ist der Abstand zwischen dem Mitnehmer und der Stirnseite des Bolzens so gewählt, daß im Falle des Aufliegens des Mitnehmers auf der Stirnseite des Bolzens diese axiale und über die Verbindungswelle auf den Faltenbalg übertragene Bewegung vom Faltenbalg aufnehmbar ist.

Ein Schutz der Vorrichtung gegen Einwirkungen von außen läßt sich nach den Merkmalen des abhängigen Anspruchs 7 auf einfache Weise dadurch realisieren, daß zwischen dem Mitnehmer und der Stirnseite des Bolzens eine die Längsbohrung des Bolzens abdichtende Dichtung angeordnet ist.

Ferner ist zum Schutz des Winkelsensors nach dem abhängigen Anspruch 8 vorgesehen, das Gehäuse des Winkelsensors mit einer Schutzabdeckung zu umgeben, die am Gehäuse des Winkelsensors oder an dessen Tragplatte befestigt ist.

Die Erfindung ist nachstehend anhand der Zeichnungen beispielhaft näher erläutert. Diese zeigen:
- Fig. 1:: einen Schnitt durch eine erfindungsgemäße Vorrichtung,
- Fig. 2:: den Winkelfehler bei einem Versatz der Achse der Sensorwelle eines Winkelsensors und der Achse des Bolzens bei einer Vorrichtung nach dem Stand der Technik und
- Fig. 3:: die entsprechenden geometrischen Verhältnisse bei der erfindungsgemäßen Vorrichtung.

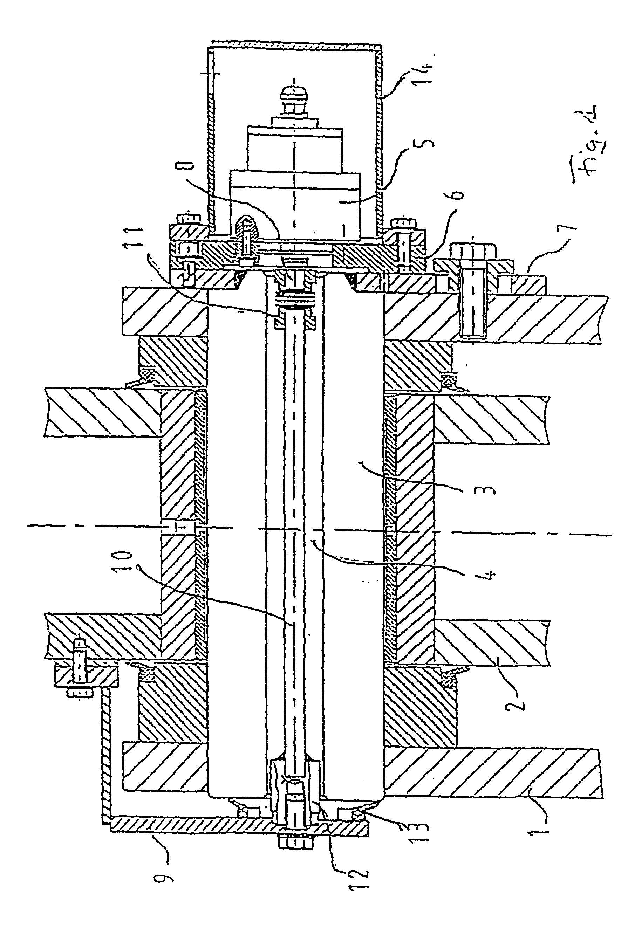

Ein Ausführungsbeispiel einer erfindungsgemäßen Vorrichtung zur Erfassung des Drehwinkels zwischen zwei Bauteilen, nämlich einem ersten Bauteil 1 und einem zweiten Bauteil 2, ist in Figur 1 dargestellt. Die beiden Bauteile 1 und 2, deren relative Winkellage und -veränderung erfasst werden soll, sind über einen Bolzen 3 drehbar miteinander verbunden. Dieser Bolzen 3 weist gegenüber bekannten Ausführungsformen zusätzlich eine durchgehende, um seine Längsachse zentrisch liegende Längsbohrung 4 geringen Durchmessers auf. Die dadurch bedingte Verringerung seines Widerstandsmomentes ist wegen des kleinen Verhältnisses von Bohrungsdurchmesser zu Außendurchmesser des Bolzens 3 vernachlässigbar klein und daher auf die Dimensionierung des Bolzens 3 selbst, wie auf die Bauteile 1 und 2, welche nach den äußeren auf sie einwirkenden Kräften zu erfolgen hat, ohne Einfluß.

Ein Winkelsensor 5 herkömmlicher Bauart, der zur Erfassung der relativen Winkellage und -veränderung der beiden Bauteile 1 und 2 dient, kann je nach Ausbildung der Halterungen seines Gehäuses, welche meist an dessen Stimfläche liegen, entweder direkt oder über eine Tragplatte 6 unmittelbar am Bolzen 3 oder, wie in Figur 1 dargestellt, an dessen Befestigungslasche 7, angebracht sein. Bei entsprechend großem Durchmesser des Winkelsensors 5 oder entsprechend großen Abmessungen von dessen Tragplatte 6 im Verhältnis zum Durchmesser des Bolzens 3 kann die Befestigung auch direkt am ersten Bauteil 1 erfolgen.

Eine genaue Fluchtung der Achse der Sensorwelle 8 des Winkelsensors 5 mit der Achse der Längsbohrung 4 des Bolzens 3 ist zur genauen Übertragung des Winkels zwischen den beiden Bauteilen 1 und 2 auf die Sensorwelle 8 nicht erforderlich. Eine Zentrierung zwischen dem Gehäuse des Winkelsensors 5 oder beim Anbau über eine Tragplatte 6 zwischen dieser und dem Gegenstück, das je nach Befestigungsart bzw. Bauteildimensionierung der Bolzen 3, dessen Befestigungslasche 7 oder das erste Bauteil 1 selbst sein kann, ist daher entbehrlich. Wird sie trotzdem vorgesehen, kann sie zur Erleichterung der Montage dienen.

Ein Mitnehmer 9 der Vorrichtung, welcher die Relativbewegung des zweiten Bauteils 2 gegenüber dem ersten Bauteil 1 erfassen und in weiterer Folge auf die Sensorwelle 8 des Winkelsensors 5 zu übertragen hat, ist an der diesem gegenüberliegenden Seite der Lagerstelle am zweiten Bauteil 2 befestigt. Auch hier ist es zur genauen Übertragung des Drehwinkels nicht erforderlich, daß die Aufnahmeöffnung des Mitnehmers 9, in welche ein nachfolgend näher beschriebenes drehsteifes Element in Form einer Muffe 12 befestigt ist, mittig zur Achse der Längsbohrung 4 des Bolzens 3 liegt.

Die Drehbewegung wird vom Mitnehmer 9 über eine innerhalb der Längsbohrung 4 des Bolzens 3 angeordnete Verbindungswelle 10 auf die Sensorwelle 8 des Winkelsensors 5 übertragen. Diese Verbindungswelle 10 kann als Vollwelle oder als Rohr ausgebildet sein und in ihren Abmessungen gering dimensioniert sein, da sie lediglich das üblicherweise kleine erforderliche Drehmoment für die Betätigung des Winkelsensors 5 zu übertragen hat. Die Verbindung dieser Verbindungswelle 10 mit der Sensorwelle 8 erfolgt über ein drehsteifes, aber biegeelastisches Element, welches beispielhaft und bevorzugt als Metallfaltenbalg 11 ausgebildet ist. Stattdessen können aber auch Kardangelenke oder Gummi-(Kunststoff-)Kupplungen Verwendung finden. Die Verbindung der Verbindungswelle 10 mit dem Mitnehmer kann, wie dargestellt, über eine drehsteife Muffe 12 geschehen, welche sowohl mit der Verbindungswelle 10 als auch mit dem Mitnehmer 9 fest verbunden ist. Auch an dieser Verbindungsstelle sind andere drehsteife und dabei biegeelastische Elemente, wie am anderen Ende der Verbindungswelle 10 beschrieben, möglich.

Ein Schutz der Vorrichtung gegen Einwirkungen von außen, z.B. Eindringen von Schmutz oder Schlageinwirkung, ist auf einfache Weise gewährleistet. Dazu ist zwischen dem Mitnehmer 9 und dem Bolzen 3 eine Dichtung 13 vorgesehen, welche bei einem größeren Durchmesser auch zum ersten Bauteil 1 hin abdichten kann. Sie verhindert das Eindringen von Schmutz in die längsbohrung 4 innerhalb des Bolzens 3. Der Winkelsensor 5 selbst kann durch eine ihn vollständig umhüllende Schutzabdeckung 14 geschützt sein, die auf einfache Weise auf der Tragplatte 6 befestigt ist oder bei Nichtvorhandensein dieser Tragplatte 6 direkt an der Haltelasche 7 des Bolzens 3 oder auch am ersten Bauteil 1 befestigt ist.

Durch die erfindungsgemäße Ausgestaltung der Vorrichtung ergeben sich hinsichtlich der Funktionalität des Systems wesentliche Vorteile, die bei bisherigen gattungsgemäßen Anordnungen eines Winkelsensors nicht zu erreichen sind:

Es ist keine genaue Fluchtung erforderlich, weder zwischen der Achse der Sensorwelle 8 des Winkelsensors 5 und der Längsbohrung 4 des Bolzens 3, noch auf der gegenüberliegenden Seite der Lagerstelle zwischen der Achse der mit dem Mitnehmer 9 fest verbundenen Muffe 12 - oder einem anderen vorstehend beispielhaft erwähnten Element zwischen Mitnehmer 9 und Verbindungswelle 10 - und der Längsbohrung 4. Bei einer Abweichung von der exakten Fluchtung liegt lediglich die Verbindungswelle 10 innerhalb der Längsbohrung 4 im Verhältnis zur Achse der Längsbohrung 4 außermittig oder steht zu dieser schräg. Es wird jedoch immer der Drehwinkel des zweiten Bauteils 2 gegenüber dem ersten Bauteil 1 auf die Sensorwelle 8 des Winkelsensors 5 übertragen. Dies gilt auch, wenn ein Lagerspiel zwischen dem Bolzen 3 und dem sich um ihn drehenden zweiten Bauteil 2 auftritt. Bei radialer Bewegung des zweiten Bauteils 2 innerhalb des Lagerspiels führt der mit dem zweiten Bauteil 2 fest verbundene Mitnehmer 9 die gleiche Bewegung aus, so daß die Achse der Muffe 12 sich im Verhältnis zur Achse der Längsbohrung 4 des Bolzens 3 radial um den gleichen Betrag verschiebt. Trotzdem wird die Verbindungswelle 10 und damit auch die Sensorwelle 8 des Winkelsensors 5 um genau den gleichen Winkel gedreht, wie er zwischen dem zweiten Bauteil 2 und dem ersten Bauteil 1 auftritt.

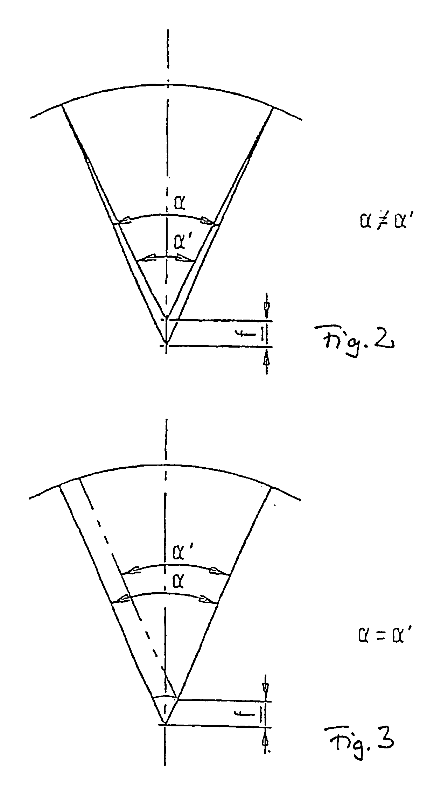

Aus Figur 3 geht diese geometrische Beziehung hervor. Der Mittelpunkt der Muffe 12 und damit auch der der darin befestigten Verbindungswelle 10 wandert bei der Drehung um einen bestimmten Winkel des zweiten Bauteils 2 um das erste Bauteil 1 auf einem Kreisbogen. Die Verbindungswelle 10 selbst wird hierbei aber um genau den gleichen Winkel gedreht. Bei einer Abweichung von der Fluchtung wird die Verbindungswelle 10 bei Verwendung einer starren Muffe 12 bei den bei üblicher Gestaltung von Lagerstellen vorkommenden Abweichungen und Lagerspielen geringfügig, d.h. weit innerhalb ihres elastischen Bereiches durchgebogen und wird in weiterer Folge auch nur geringe Radialkräfte auf die Sensorwelle 8 des Winkelsensors 5 ausüben. Da die Verbindungswelle 10 über die Muffe 12 oder ein anderes drehsteifes biegeelastisches Element mit dem Mitnehmer 9 fest verbunden ist, ist an dieser Stelle im Unterschied zu bisher bekannten Lösungen kein Spiel gegeben, so daß auch bei Drehrichtungsumkehr des zweiten Bauteils 2 gegenüber dem ersten Bauteil 1 keine Verfälschung des zu übertragenden Winkels durch Überbrückung eines Spiels auftreten kann.

Im Vergleich hierzu zeigt Figur 2 bei einer gattungsgemäßen Vorrichtung nach dem Stand der Technik den Winkelfehler bei einem Versatz f der Achse der Sensorwelle des Winkelsensors und der Achse des die Bauteile verbindenden Bolzens unter Annahme eines vertikalen Versatzes zur Halbierenden des Drehwinkels.

Durch die erfindungsgemäße Ausgestaltung ist somit unter allen Umständen gewährleistet, daß der Drehwinkel zwischen den Bauteilen 2 und 1 genau in den Winkelsensor 5 eingeleitet wird und daher von diesem, soweit es die Winkelerfassung auf mechanischem Wege betrifft, keine Fehlwerte ausgegeben werden können.

Die gesamte Vorrichtung ist gegen das Eindringen von Schmutz völlig abgekapselt und die Dimensionierung der Schutzabdeckung 14 des Winkelsensors 5 sowie die Gestaltung des Mitnehmers 9 können so ausgeführt werden, daß sie den mechanischen Gefährdungen, welchen die Lagerstelle insgesamt beim Einsatz ausgesetzt ist, widerstehen. Die Breite des Ringspaltes zwischen dem Mitnehmer 9 und dem Bolzen 3, der durch die Dichtung 13 verschlossen wird, kann klein gehalten werden. Bei einer unvorhergesehenen großen Gewalteinwirkung auf den Mitnehmer 9 in axialer Richtung kommt dieser am Bolzen 3 zum Anliegen, wobei die Verbindungswelle 10 die gleiche axiale Verschiebung erfährt. Dieser Verschiebeweg wird vom Metallfaltenbalg 11 aufgenommen, so daß die Sensorwelle 8 des Winkelsensors 5 nur eine geringe oder keine axiale Belastung erfährt. Es wird daher im ungünstigsten Falle großer Gewalteinwirkung lediglich der einfach aufgebaute Mitnehmer 9 in Mitleidenschaft gezogen, der aufwendigere Winkelsensor 5 aber nicht beeinträchtigt.

Natürlich ist die Erfindung nicht auf das dargestellte Ausführungsbeispiel beschränkt. Weitere Ausgestaltungen sind möglich, ohne den Grundgedanken zu verlassen. So können der oder die drehsteifen biegeelastischen Elemente 11, 12 auch auf andere Weise realisiert werden und dgl. mehr.

## Patentansprüche

1. Vorrichtung zur Erfassung des Drehwinkels zwischen einem ersten Bauteil ( 1 ) und einem zweiten Bauteil (2), wobei:
◆ das erste Bauteil (1) drehfest mit einem Bolzen (3) verbunden ist, um dessen äußeren Umfang und zumindest sich über einen Teil seiner Länge erstreckend das zweite Bauteil (2) verdrehfähig angeordnet ist,
◆ zur Erfassung des Drehwinkels ein Winkelsensor (5) vorgesehen ist, der an einem der Bauteile ( 1;2) befestigt ist und dessen den Drehwinkel erfassende Sensorwelle (8) über wenigstens ein drehsteifes biegeelastisches Element (11;12) mit dem anderen Bauteil (1;2) in Verbindung steht,
**dadurch gekennzeichnet, daß**
a) der Winkelsensor (5) direkt oder indirekt mit einer Seite des ersten Bauteils ( 1 ) und/oder des Bolzens (3) drehfest verbunden ist,
b) sich innerhalb des Bolzens (3) eine im wesentlichen koaxiale Längsbohrung (4) befindet,
c) innerhalb der Längsbohrung (4) und in einer im wesentlichen koaxialen Ausrichtung zu dieser eine Verbindungswelle (10) angeordnet ist, deren Durchmesser kleiner als der der Längsbohrung (4) ist,
d) die Verbindungswelle (10) unter Zwischenschaltung wenigstens eines drehsteifen biegeelastischen Elements (11;12) einenends antriebsmäßig mit der Sensorwelle (8) gekoppelt ist,
e) die Verbindungswelle (10) anderenends einen drehfest mit ihr verbundenen Mitnehmer (9) aufweist, der am zweiten Bauteil (2) befestigt ist.

2. Vorrichtung nach Anspruch 1, **dadurch gekennzeichnet, daß** das Gehäuse des Winkelsensors (5) direkt oder über eine Tragplatte (6) am Bolzen (3), an einer Bolzenhalteplatte (7) oder am ersten Bauteil (1) befestigt ist.

3. Vorrichtung nach den Ansprüchen 1 und 2, **dadurch gekennzeichnet, daß** die Sensorwelle (8) über ein erstes drehsteifes biegeelastisches Element (11) mit der Verbindungswelle (10) verbunden ist und das andere Ende der Verbindungswelle (10) über ein zweites drehsteifes Element (12) mit dem Mitnehmer (9).

4. Vorrichtung nach den Ansprüchen 1 und 3, **dadurch gekennzeichnet, daß** das drehsteife biegeelastische Element (11) als Faltenbalg, insbesondere Metallfaltenbalg, ausgebildet ist.

5. Vorrichtung nach den Ansprüchen 1 und 3, **dadurch gekennzeichnet, daß** das zweite drehsteife Element (12) als Muffe ausgebildet ist, welche drehfest sowohl mit dem Mitnehmer (9) als auch der Verbindungswelle (10) verbunden ist.

6. Vorrichtung nach einem oder mehreren der vorstehenden Ansprüche, **dadurch gekennzeichnet, daß** der Mitnehmer (9) so im Abstand zum Bolzen (3) befestigt ist, daß im Falle des Aufliegens des Mitnehmers (9) auf der Stirnseite des Bolzens (3) diese axiale über die Verbindungswelle (10) auf den Faltenbalg (11) übertragene Bewegung von dem Faltenbalg (11) aufnehmbar ist.

7. Vorrichtung nach einem oder mehreren der vorstehenden Ansprüche, **dadurch gekennzeichnet, dass** zwischen dem Mitnehmer (9) und der Stirnseite des Bolzens (3) eine die Längsbohrung (4) des Bolzens (3) abdichtende Dichtung (13) angeordnet ist.

8. Vorrichtung nach einem oder mehreren der vorstehenden Ansprüche, **dadurch gekennzeichnet, dass** das Gehäuse des Winkelsensors (5) von einer dieses vollständig umschließenden Schutzabdeckung (14) umgeben ist, die entweder am Gehäuse des Winkelsensors (5) oder an dessen Tragplatte (6) befestigt ist.

## Claims

1. A device for the recording of the angle or rotation between a first component (1) and a second component (2) in which:
◆ the first component (1) is connected to a bolt (3) so that it cannot turn, around the outer circumference of which is arranged a second component (2) extending over a part of its length so that it is capable of turning,
◆ for recording the angle of rotation an angular sensor (5) is envisaged, which is fixed to one of the components (1;2) and the sensor shaft (8) for recording the angle of rotation is connected with the other component (1;2) by at least one torsionally stiff but flexurally elastic element (11;12),
**characterised in that:**
a) the angular sensor (5) is connected directly or indirectly with one side of the first component (1) and/or of the bolt (3) such that it cannot turn,
b) within the bolt (3) there is an essentially coaxial longitudinal drilling (4),
c) within the longitudinal drilling (4) and in an essentially coaxial alignment a connecting shaft (10) is arranged, the diameter of which is smaller than that of the longitudinal drilling (4),
d) the connecting shaft (10) is coupled at one end to the sensor shaft (8) so as to drive it, with the interposition of at least one torsionally stiff but flexurally elastic element (11;12),
e) at the other end the connecting shaft (10) possesses a catch (9) which is firmly joined to it, which is fixed to the second component (2).

2. A device in accordance with claim 1, **characterised in that**, the casing of the angular sensor (5) is fixed directly or via a base plate (6) on the bolt (3) to a bolt retaining plate (7) or to the first component (1).

3. A device in accordance with claims 1 and 2, **characterised in that**, the sensor shaft (8) is joined with the connecting shaft (10) by a first torsionally stiff but flexurally elastic element (11) and the other end of the connecting shaft (10) is joined by a second torsionally stiff element to the catch (9).

4. A device in accordance with claims 1 and 3, **characterised in that** the torsionally stiff but flexurally elastic element (11) is formed as a bellows, in particular a metallic bellows.

5. A device in accordance with claims 1 and 3, **characterised in that** the second torsionally stiff but flexurally elastic element (12) is formed as a sleeve, which is firmly joined both with the catch (9) and also the connecting shaft (10).

6. A device in accordance with one or more of the preceding claims, **characterised in that**, the catch (9) is fixed at such a distance from the bolt (3), that in the event of the lying of the catch (9) on the front side of the bolt (3) this axial motion transmitted by the connecting shaft (10) to the bellows (11) is acceptable.

7. A device in accordance with one or more of the preceding claims, **characterised in that** between the catch (9) and the front side of the bolt (3) a gasket is arranged for sealing the longitudinal drilling (4) of the bolt (3).

8. A device in accordance with one or more of the preceding claims, **characterised in that** the casing of the angular sensor (5) is surrounded by one of these completely enclosing protective covers (14) which is fixed either to the casing of the angular sensor (5) to its base plate (6).

## Revendications

1. Dispositif pour la détection de l'angle de rotation entre un premier composant (1 ) et un deuxième composant (2) dans lequel :
◆ le premier composant (1) est relié de manière à résister à la torsion à un boulon (3), le deuxième composant (2) étant monté de manière à pouvoir tourner sur sa périphérie extérieure et au moins sur une partie de sa longueur,
◆ pour détecter l'angle de rotation, il est prévu un capteur d'angle (5) qui est fixé sur l'un des composants (1 ; 2) et dont l'arbre détecteur détectant l'angle de rotation est en liaison avec l'autre composant (1 ; 2) par le biais d'au moins d'un élément flexible résistant à la torsion (11; 12),
**caractérisé en ce que,**
a) le capteur d'angle (5) est relié de manière à résister à la torsion directement ou indirectement avec un côté du premier composant (1) et/ou du boulon (3),
b) un alésage longitudinal essentiellement coaxial (4) se trouve à l'intérieur du boulon (3),
c) à l'intérieur de l'alésage longitudinal (4) et dans une direction coaxiale, essentiellement, par rapport à celle-ci, un arbre de liaison (10) est disposé dont le diamètre est inférieur à celui de l'alésage longitudinal (4),
d) l'arbre de liaison (10) est couplé à une extrémité et de manière à le commander avec l'arbre détecteur (8) par l'insertion d'au moins un élément flexible résistant à la torsion (11;12),
e) l'arbre de liaison (10) présente à son autre extrémité un entraîneur (9), relié avec lui de manière à résister à la torsion, qui est fixé sur le deuxième composant (2).

2. Dispositif selon la revendication 1, **caractérisé en ce que** le carter du capteur d'angle (5) est fixé directement ou via une plaque d'appui (6) sur le boulon (3), sur une plaque d'appui du boulon (7) ou sur le premier composant (1).

3. Dispositif selon les revendications 1 et 2, **caractérisé en ce que** l'arbre détecteur (8) est relié par un premier élément flexible résistant à la torsion (11) avec l'arbre de liaison (10) et l'autre extrémité de l'arbre de liaison (10) est reliée avec l'entraîneur (9) par l'intermédiaire d'un deuxième élément résistant à la torsion (12).

4. Dispositif selon les revendications 1 et 3, **caractérisé en ce que** l'élément flexible résistant à la torsion (11) a la forme d'un soufflet, en particulier d'un souffler métallique.

5. Dispositif selon les revendications 1 et 3, **caractérisé en ce que** le deuxième élément résistant à la torsion (12) a la forme d'un manchon qui est relié de manière à résister à la torsion tant avec l'entraîneur (9) que l'arbre de liaison (10).

6. Dispositif selon l'une ou plusieurs revendications qui précédent, **caractérisé en ce que** l'entraîneur (9) est fixé à distance du boulon (3) de manière telle que dans le cas de l'application de l'entraîneur (9) sur la face avant du boulon (3), ce mouvement axial transmis via l'arbre de liaison (10) au soufflet (11) puisse être contenu par le soufflet (11).

7. Dispositif selon l'une ou plusieurs des revendications qui précédent, **caractérisé en ce que** entre l'entraîneur (9) et la face avant du boulon (3), un joint (13), qui ferme l'alésage longitudinal (4) du boulon (3), est disposé.

8. Dispositif selon l'une ou plusieurs des revendications qui précédent, **caractérisé en ce que** le carter du capteur d'angle (5) est entouré d'un couvercle de protection (14) enfermant celui-ci complètement, qui est fixé soit sur le carter du capteur d'angle (5), soit sur sa plaque d'appui (6).
